# EUROPÄISCHE PATENTANMELDUNG

(11) **EP 0 984 228 A2**
(43) Veröffentlichungstag der Anmeldung: **08.03.2000**
(21) Anmeldenummer: 99250294.8
(22) Anmeldetag: 27.08.1999
(51) Int. Cl.: F24J 2/04, F24J 2/46

(54) **Solarkollektorgehäuse**

(30) Priorität: 28.08.1998 DE 19840544
(71) Anmelder: Alligator, 12489 Berlin (DE)
(72) Erfinder: Furgac, Izzet, Dr.-Ing., 14055 Berlin (DE); Voit, Lorenz, Dr.-Ing., 10967 Berlin (DE); Warmuth, Frank, Dr.-Ing., 13629 Berlin (DE)
(74) Vertreter: Böning, Manfred, Prof.Dr.-Ing.

(57) **Zusammenfassung**

Solarkollektoren sind widrigen Witterungseinflüssen ausgesetzt. Um ihre langjährige Nutzung zu ermöglichen, kommt sowohl der Materialauswahl für ihr Gehäuse als auch dessen Gestaltung eine große Bedeutung zu. Vorgeschlagen wird die Verwendung eines aus einem duromeren Kunststoff bestehenden Gehäuses (1), das einen wannenartigen Gehäuseteil mit zwei über eine Querwand (9) miteinander verbundenen Seitenwänden (8,10) aufweist, die einen nach unten offenen Hohlraum für ein isolierendes Luftpolster begrenzen und zusammen mit Belüftungsöffnungen (6,7) im Boden (5) des Gehäuses (1) einer Kondensatbildung im Gehäuse (1) entgegenwirken.

## Beschreibung

Die Erfindung betrifft ein Solarkollektorgehäuse aus Kunststoff mit einem wannenartigen Gehäuseteil zur Aufnahme einer bodenseitigen Isolierung und mindestens eines Wärmeabsorbers, mit einer umlaufenden Auflagefläche für eine lichtdurchlässige Abdeckung sowie mit einem in Form und Größe an Dachsteine einer durch das Gehäuse zu ersetzenden Dachsteingruppe angepaßten Rand.

Aus der DE 29 46 525 A1 ist ein Gehäuse der vorgenannten Art bekannt, das aus thermoplastischem Material besteht. Die Verwendung eines thermoplastischen Kunststoffes bietet zwar den Vorteil einer einfachen Herstellung des Gehäuses durch Tiefziehen, bringt indes insofern Probleme mit sich als im Wärmeabsorber Temperaturen bis zu 200° auftreten, die bei der Integration von wärmeführenden Teilen zu unerwünschten Verformungen des Gehäuses führen können. Als nachteilig erweist sich bei dem bekannten Gehäuse zudem der Umstand, daß die Ausbildung seiner Seitenwände und seines Bodens die Gefahr einer Kondensatbildung im Gehäuse in sich birgt.

Der Erfindung liegt die Aufgabe zugrunde, ein Solarkollektorgehäuse zu schaffen, das eine problemlose Integration wärmeführender Teile des Kollektors ermöglicht und bei dem die Gefahr einer Kondensatbildung im Gehäuse praktisch eliminiert ist. Gelöst wird diese Aufgabe bei einem gattungsgemäßen Solarkollektorgehäuse erfindungsgemäß dadurch, daß das Gehäuse aus einem duromeren Kunststoff besteht, daß sein wannenartiger Gehäuseteil zwei im Abstand voneinander angeordnete, im wesentlichen gleich hohe, einen nach unten offenen Hohlraum für ein isolierendes Luftpolster begrenzende umlaufende Seitenwände aufweist und daß der Boden des Gehäuses mit Belüftungsöffnungen versehen ist.

Das erfindungsgemäße Gehäuse ist witterungsbeständig und verfügt über eine hohe Temperaturfestigkeit. Die Verwendung umlaufender, nach unten offener Hohlwände wirkt in Verbindung mit dem Öffnungen aufweisenden Boden des Gehäuses einer unerwünschten Kondensatbildung entgegen.

Die Verwendung von Duromeren und anderen hochschmelzenden Kunststoffen ist als solche im Bereich der Solarkollektortechnik nicht neu, wie dies beispielsweise die DE-A 195 00 526 lehrt. Auch Kollektorgehäuse mit zwei im Abstand voneinander angeordneten, im wesentlichen gleich hohen, einen nach unten offenen Hohlraum für ein isolierendes Luftpolster begrenzenden umlaufenden Seitenwänden sind - wie sich dies aus der DE-U 77 30 084 ergibt - nicht neu, ihre vorteilhafte, eine Kondensatbildung unterbindende Wirkung wurde indes nicht erkannt, und die Kombination einer umlaufenden doppelten Seitenwand mit einem ebenfalls einer Kondensatbildung entgegenwirkenden, Belüftungsöffnungen aufweisenden Gehäuseboden lag folglich nicht nahe.

Als besonders vorteilhaft erweist es sich, wenn beide Seitenwände und eine ihre oberen Enden miteinander verbindende Querwand mit nach oben offenen muldenförmigen Aussparungen für Zu- und Abflußstutzen des Absorbers ausgestattet sind. In einem solchen Fall kann die Abstützung des Absorbers über an seinen sich gegenüberliegenden Seiten paarweise angeordnete Zu- und Abflußstutzen erfolgen.

Weitere Einzelheiten und Merkmale der Erfindung ergeben sich aus den Unteransprüchen und der nachstehenden Beschreibung einer in der beigefügten Zeichnung dargestellten, besonders vorteilhaften Ausführungsform der Erfindung. Es zeigen:

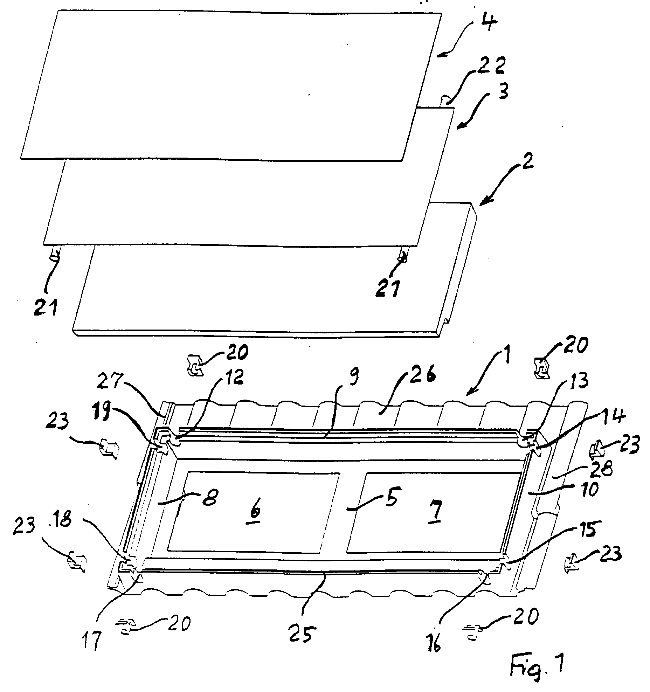

- Fig. 1: eine perspektivische Ansicht eines Solarkollektorgehäuses und der von diesem aufzunehmenden Teile,

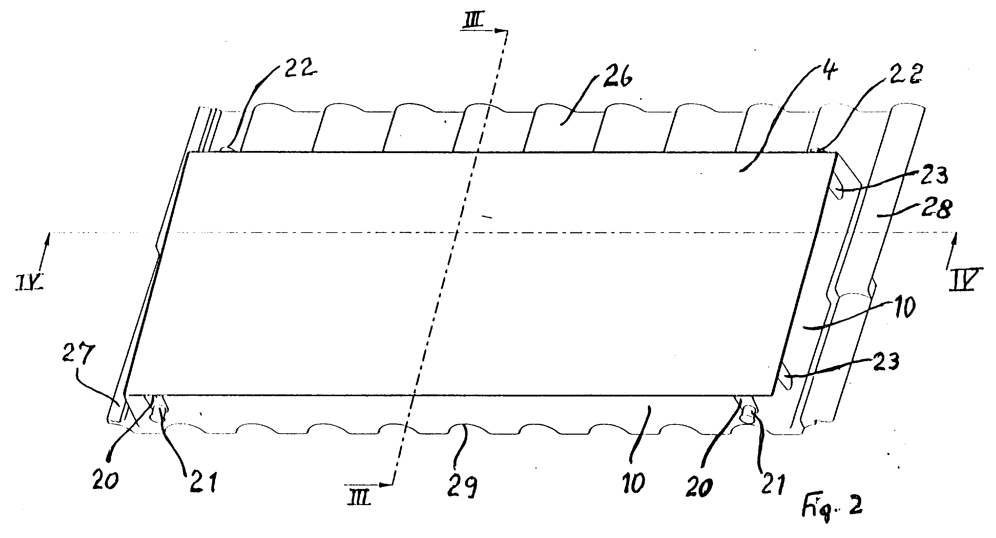

- Fig. 2: eine perspektivische Ansicht der in Fig. 1 dargestellten Teile nach ihrem Zusammenbau,
- Fig. 3: einen Schnitt längs der Linie III-III in Fig. 2 und
- Fig. 4: einen Schnitt längs der Linie IV-IV in Fig. 2.

In den Figuren ist 1 das aus einem duromeren Kunststoff bestehende Gehäuse eines Solarkollektors, das zur Aufnahme einer als stabilisierender Formkörper ausgebildeten Isolierung 2, eines Wärmeabsorbers 3 und einer durchsichtigen Abdeckung 4 dient. Das aus einem Stück bestehende Gehäuse 1 besitzt einen zentralen wannenförmigen Gehäuseteil, dessen Boden 5 mit vergleichsweise großen Belüftungsöffnungen 6 und 7 versehen ist. Der Rand des Gehäuseteils wird von einer umlaufenden inneren Seitenwand 8 und einer über eine umlaufende Querwand 9 mit dieser verbundenen umlaufenden äußeren Seitenwand 10 gebildet. Die im wesentlichen gleich hohen Seitenwände 8 und 10 begrenzen zusammen mit der Querwand 9 einen nach unten offenen Hohlraum 11 für ein isolierendes Luftpolster.

Die Seitenwände 8, 10 und die Querwand 9 sind mit insgesamt acht nach oben offenen muldenförmigen Aussparungen 12 bis 19 versehen, von denen jeweils zwei in sich gegenüberliegenden Rändern des wannenförmigen Gehäuseteils angeordnete Aussparungen zur Aufnahme von mit Bohrungen versehenen Stützlagern 20 für Zu- und Abflußstutzen 21 bzw. 22 des Wärmesabsorbers 3 dienen. Die nicht genutzten Aussparungen lassen sich durch Einsätze 23 schließen.

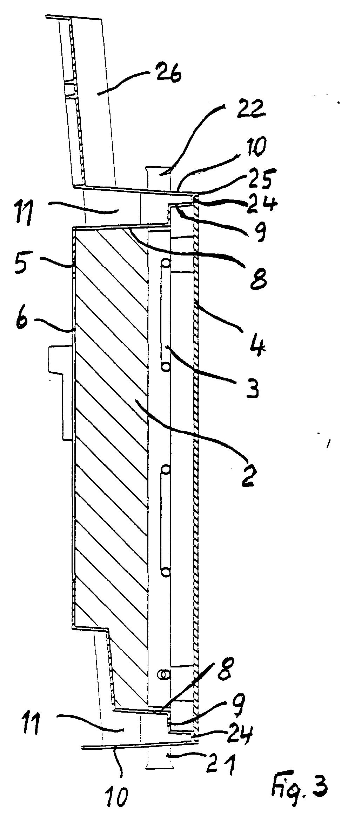

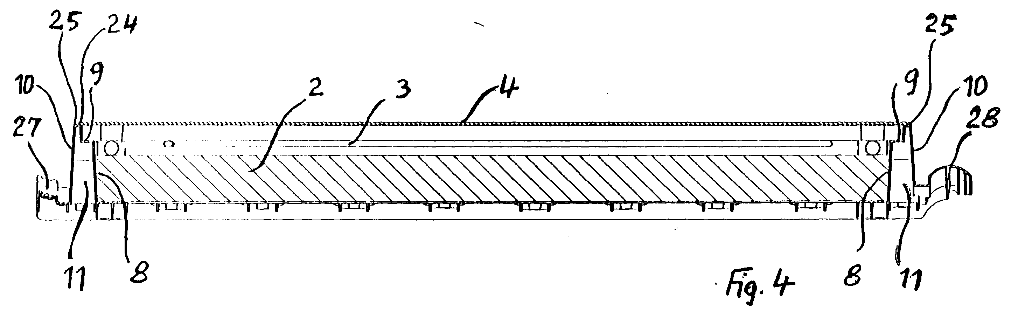

Wie am besten aus Fig. 3 und 4 erkennbar, ist die Querwand 9 stufenförmig ausgebildet. Ihre oberste Stufe bildet eine Auflagefläche 24 für die Abdeckung 4, die durch einen umlaufenden Steg 25 in ihrer Sollage gehalten wird.

An den wannenförmigen Gehäuseteil schließt sich oben ein in Form und Größe an die Dachsteine der Dacheindeckung angepaßter Rand 26 an, der im montierten Zustand des Kollektors die an das Gehäuse angrenzende Dachsteinreihe untergreift. Ein linker Rand 27 ist ebenfalls mit einem Untergreifprofil versehen, während der rechte Rand 28 des Gehäuses 1 die an ihn angrenzende vertikale Dachsteinreihe übergreift. Der untere Rand 29 des Gehäuses weist lediglich ein auf die Dachsteine der Dacheindeckung abgestimmtes Profil auf.

## Patentansprüche

1. Solarkollektorgehäuse aus Kunststoff mit einem wannenartigen Gehäuseteil zur Aufnahme einer bodenseitigen Isolierung und mindestens eines Wärmeabsorbers, mit einer umlaufenden Auflagefläche für eine lichtdurchlässige Abdeckung sowie mit einem in Form und Größe an Dachsteine einer durch das Gehäuse zu ersetzenden Dachsteingruppe angepaßten Rand, **dadurch gekennzeichnet**, daß das Gehäuse (1) aus einem duromeren Kunststoff besteht, daß sein wannenartiger Gehäuseteil zwei im Abstand voneinander angeordnete, im wesentlichen gleich hohe, einen nach unten offenen Hohlraum (11) für ein isolierendes Luftpolster begrenzende umlaufende Seitenwände (8,10) aufweist und daß der Boden (5) des Gehäuses (1) mit Belüftungsöffnungen (6,7) versehen ist.

2. Gehäuse nach Anspruch 1, **dadurch gekennzeichnet**, daß beide Seitenwände (8,10) und eine ihre oberen Enden miteinander verbindende umlaufende Querwand (9) mit nach oben offenen muldenförmigen Aussparungen (12-19) für Zu- und Abflußstutzen (20,21) des Absorbers (3) ausgestattet sind.

3. Gehäuse nach Anspruch 2, **dadurch gekennzeichnet**, daß die Querwand (9) stufenförmig ausgebildet ist und eine ihrer Stufen eine durch einen umlaufenden Steg (25) begrenzte Auflagefläche (24) für die Abdeckung (4) aufweist.

4. Gehäuse nach Anspruch 2 und 3, **dadurch gekennzeichnet**, daß nicht benötigte muldenförmige Aussparungen (14,15,18,19) durch Einsätze (23) mit einer an die Stufen der Querwand (9) angepaßten Kontur verschließbar sind.

5. Gehäuse nach einem oder mehreren der Ansprüche 1 bis 4, **dadurch gekennzeichnet**, daß der Boden (5) des Gehäuses (1) nach dessen Einbau im wesentlichen auf gleicher Höhe wie die Dachsteinoberfläche liegt.

6. Gehäuse nach einem oder mehreren der Ansprüche 1 bis 5, **dadurch gekennzeichnet**, daß es als einteiliger Kunststoffkörper ausgebildet ist.
